# EUROPEAN PATENT APPLICATION

(11) **EP 3 564 575 A1**
(43) Date of publication of application: **06.11.2019**
(21) Application number: 17889140.4
(22) Date of filing: 22.12.2017
(51) Int. Cl.: F17C 13/04, F16K 27/00

(54) **VALVE BLOCK, AND TANK DEVICE EQUIPPED WITH SAME**

(30) Priority: 27.12.2016 JP 2016253222
(71) Applicant: Kawasaki Jukogyo Kabushiki Kaisha, Kobe-shi, Hyogo 650-8670 (JP)
(72) Inventor: KOORI, Kenji, Kobe-shi, Hyogo 650-8670 (JP); YOSHIDA, Katsu, Kobe-shi, Hyogo 650-8670 (JP); OKAMOTO, Masayoshi, Kobe-shi, Hyogo 650-8670 (JP); SUZUKI, Yutaka, Kobe-shi, Hyogo 650-8670 (JP); NINOMIYA, Makoto, Kobe-shi, Hyogo 650-8670 (JP)
(74) Representative: Dehns
(86) International application number: PCT/JP2017/046129
(87) International publication number: WO 2018/123866

(57) **Abstract**

A valve block is externally attached to and fastened to a projecting portion of a tank, and a valve device is attachable to the valve block so as to be located outside the tank. The tank includes a tank main body and the projecting portion. The tank main body stores gas, and the projecting portion projects from the tank main body in a predetermined direction. A tank passage is formed at the projecting portion and connected to an inside of the tank main body. The tank passage includes a tank port formed on an outer peripheral surface of the projecting portion. The valve block includes: an inner hole portion into which the projecting portion is inserted; and a block passage including a connecting port that is open on an inner peripheral surface of the inner hole portion. With the projecting portion externally attached to the inner hole portion, the connecting port is connected to the tank passage through the tank port.

## Description

### Technical Field

The present invention relates to a valve block attachable to a tank storing gas, and a tank apparatus including the valve block.

### Background Art

A tank apparatus includes a valve device configured to adjust a discharge flow rate of gas stored in a tank, and the valve device is provided at a port portion of the tank through a valve block. One example of such tank apparatus is disclosed in PTL 1. The tank apparatus of PTL 1 includes a pressure vessel (tank) and a valve device. The valve device includes a housing integrated with the valve block, and the housing is threadedly engaged with an inner peripheral surface of a port portion of the pressure vessel. A valve passage is formed at the housing. A discharge amount of gas in the pressure vessel can be adjusted by adjusting an opening degree of the valve passage by a valve element.

### Citation List

### Patent Literature

PTL 1: Japanese Laid-Open Patent Application Publication No. 2015-161378

### Summary of Invention

### Technical Problem

In the tank apparatus of PTL 1, a hole diameter of the port portion needs to be made large due to reasons below. To be specific, in order to insert the valve device into an inner hole of the port portion for arranging the valve device inside the tank, the inner hole of the port portion needs to be made large. In the tank apparatus of PTL 1, the valve device is attached to the pressure vessel by inserting the housing into the port portion of the pressure vessel. Therefore, the housing receives a load acting from the gas in the pressure vessel in a direction in which the housing comes out from the pressure vessel. On this account, according to the tank apparatus of PTL 1, an outer diameter of the housing is made large, and fastening power between the housing and the tank is made large. With this, the housing is prevented from coming out from the pressure vessel. As above, the outer diameter of the housing needs to be made large, and the inner hole of the port portion needs to be made large.

Further, in order to secure the strength of the pressure vessel, carbon fibers are wound around an outer surface of the pressure vessel. When the strength of the pressure vessel decreases by the increase in the hole diameter of the port portion, the amount of carbon fibers used increases. Since the carbon fibers are expensive, it is preferable to reduce the amount of carbon fibers used. Therefore, the inner hole diameter of the port portion of the pressure vessel is desired to be made small.

An object of the present invention is to provide a valve block capable of reducing an inner hole diameter of a projecting portion corresponding to a port portion of a tank, and a tank apparatus including the valve block.

### Solution to Problem

A valve block of the present invention is a valve block externally attached to and fastened to a projecting portion of a tank. A valve device is attachable to the valve block so as to be located outside the tank. The tank includes a tank main body and the projecting portion. The tank main body stores gas, and the projecting portion projects from the tank main body in a predetermined direction. A tank passage is formed at the projecting portion and connected to an inside of the tank main body. The tank passage includes a tank port formed on an outer peripheral surface of the projecting portion. The valve block includes: an inner hole portion into which the projecting portion is inserted; and a block passage including a connecting port that is open on an inner peripheral surface of the inner hole portion. With the projecting portion inserted into the inner hole portion, the connecting port is connected to the tank passage through the tank port.

According to the present invention, the valve device is arranged outside the tank, and the valve block is externally attached to the projecting portion. Therefore, the section of the tank passage, i.e., the inner hole diameter of the projecting portion can be made smaller than that of the conventional tank apparatus.

Further, in the present invention, the valve block is externally attached to the projecting portion, and the connecting port is formed on the inner peripheral surface of the valve block. Therefore, the load acting on the valve block from the gas in the predetermined direction can be suppressed. To be specific, the load acting in a direction in which the valve block comes out from the projecting portion can be reduced, and therefore, the valve block can be fastened to the projecting portion by fastening power smaller than that of the conventional tank apparatus. Thus, the projecting portion can be reduced in size.

In the above invention, the inner hole portion may form a join space between the inner peripheral surface and the projecting portion, the join space extending in a circumferential direction of the projecting portion over an entire periphery of the projecting portion. The connecting port may be connected to the tank port through the join space. With the projecting portion inserted into the inner hole portion, a gap between the inner hole portion and the projecting portion may be sealed such that the join space is isolated from an atmosphere.

According to the above configuration, even when the tank port and the connecting port are arranged so as to be shifted from each other in the circumferential direction, the tank port and the connecting port can be connected to each other through the join space. Therefore, the positional accuracy of the connecting port relative to the tank port in the circumferential direction when attaching the valve block is not required, and thus, the easiness of the attachment of the valve block can be improved.

In the above invention, the join space may be formed on the inner peripheral surface of the inner hole portion in the circumferential direction over the entire periphery by depressing the inner peripheral surface of the inner hole portion outward in a perpendicular direction perpendicular to the predetermined direction.

According to the above configuration, the loads acting on the valve block in the predetermined direction from the gas flowing through the join space can be made to cancel each other. With this, the projecting portion can be further reduced in size.

In the above invention, the valve block may be fastened to the projecting portion by being sandwiched between a flange formed at a base end side of the projecting portion and a fastening member threadedly engaged with a tip end side of the projecting portion.

According to the above configuration, since the valve block is rotatable relative to the projecting portion, the direction of the valve block can be easily changed. With this, the direction of the valve block can be changed without rotating the tank.

In the above invention, the inner peripheral surface of the inner hole portion may include: a small-diameter part corresponding to a tip end side of the projecting portion, the projecting portion including a tank step part at an intermediate part of the projecting portion and formed such that the tip end side with respect to the tank step part is smaller in diameter than a base end side with respect to the tank step part; a large-diameter part corresponding to the base end side of the projecting portion; and a block step part between the large-diameter part and the small-diameter part. With the projecting portion inserted into the inner hole portion, the block step part may be located away from and opposed to the tank step part in the predetermined direction, and the join space may be formed between the block step part and the tank step part.

According to the above configuration, since the valve block does not have to be formed so as to be depressed, the formation of the valve block is easy.

A tank apparatus of the present invention includes: any one of the above valve blocks; the tank including the tank main body and the projecting portion; and two sealing members sealing between the inner hole portion and the projecting portion respectively at a first side and second side with respect to the connecting port in the predetermined direction such that the connecting port is isolated from an atmosphere with the projecting portion inserted into the inner hole portion.

According to the above configuration, the sealing members are respectively arranged at the first side and second side with respect to the connecting port in the predetermined direction. With this, pushing force by the pressure acting inside the valve is canceled. Therefore, the load acting on the valve block form the gas can be reduced.

### Advantageous Effects of Invention

According to the present invention, the inner hole diameter of the projecting portion of the tank can be made small.

The above object, other objects, features, and advantages of the present invention will be made clear by the following detailed explanation of preferred embodiments with reference to the attached drawings.

### Brief Description of Drawings

Fig. 1 is a front view showing a tank apparatus of Embodiment 1.
Fig. 2 is an enlarged sectional view showing the vicinity of a valve block of the tank apparatus of Fig. 1.
Fig. 3 is an enlarged sectional view showing part of the valve block of the tank apparatus of Embodiment 2.
Fig. 4 is an enlarged sectional view showing part of the valve block of the tank apparatus of Embodiment 3.

### Description of Embodiments

Hereinafter, tank apparatuses 1, 1A, and 1B of Embodiments 1, 2, and 3 according to the present invention will be described with reference to the drawings. It should be noted that directions stated in the following description are used for convenience sake, and directions and the like of components of the present invention are not limited. Further, each of the tank apparatuses 1, 1A, and 1B is just one embodiment of the present invention. Therefore, the present invention is not limited to the embodiments, and additions, deletions, and modifications may be made within the scope of the present invention.

### Embodiment 1

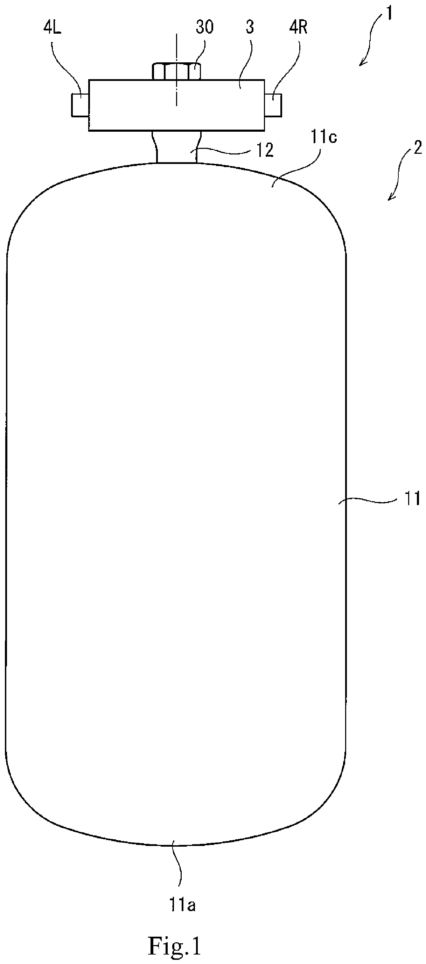

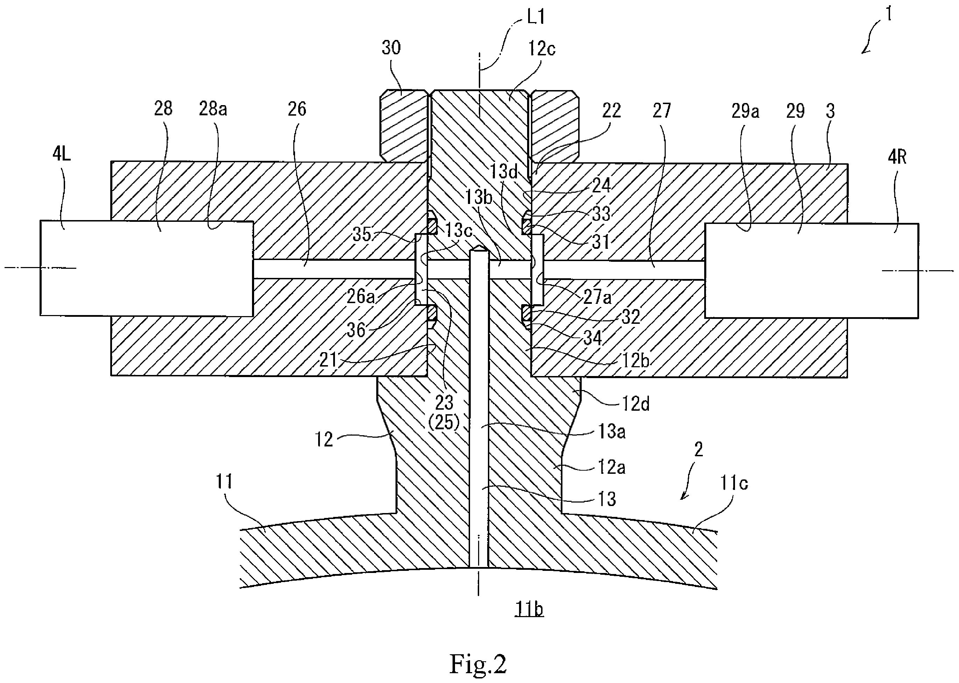

A tank apparatus 1 shown Fig. 1 stores high-pressure gas (for example, 70 MPa or more) and discharges and supplies the gas to a gas consuming unit, such as a gas engine or a fuel cell. It should be noted that the gas stored in the tank apparatus 1 does not necessarily have to be the high-pressure gas and may be intermediate-pressure gas or low-pressure gas having pressure of less than 70 MPa. The tank apparatus 1 having such functions includes a tank 2, a valve block 3, and two valve devices 4L and 4R. The tank 2 extends along a predetermined axis L1, i.e., an axial direction and is configured to be able to store the gas. More specifically, the tank 2 includes a tank main body 11 and a port portion 12. The tank main body 11 is formed in a substantially bottomed tubular shape, and an opposite side of a bottom part 11a (i.e., an opening side) is covered with a ceiling part 11b. A storage space 11c (see Fig. 2) is formed in the tank main body 11 configured as above, and the tank main body 11 can store the gas in the storage space 11c. The port portion 12 is provided at the ceiling part 11b of the tank main body 11.

Hereinafter, the configurations of the port portion 12 and the like will be described with reference to Fig. 2. Fig. 2 is an enlarged sectional view showing the valve block 3 and the port portion 12, the sectional view being prepared by cutting the tank apparatus 1 along a virtual plane which is parallel to a paper surface of Fig. 1 and passes through the axis L1. The port portion 12 that is a projecting portion projects from the ceiling part 11b toward a first side in the axial direction (i.e., a predetermined direction) and extends along the axis L1. The port portion 12 is formed in a substantially columnar shape, and a tank passage 13 is formed in the port portion 12. The tank passage 13 is constituted by a first passage part 13a and a second passage part 13b. The first passage part 13a extends along the axis L1, and one end of the first passage part 13a is connected to the storage space 11c of the tank main body 11. The other end of the first passage part 13a reaches an intermediate part 12b of the port portion 12. The first passage part 13a is connected to the second passage part 13b in the vicinity of the other end of the first passage part 13a. The second passage part 13b is formed at the intermediate part 12b of the port portion 12 so as to penetrate the port portion 12 in a radial direction. Two tank ports 13c and 13d are provided at one end and the other end of the second passage part 13b. The two tank ports 13c and 13d are open on an outer peripheral surface of the port portion 12 and are located at positions opposite to each other on the outer peripheral surface of the port portion 12. To be specific, the two tank ports 13c and 13d are arranged at positions shifted from each other by about 180 degrees in a circumferential direction on the outer peripheral surface of the port portion 12. Regarding the port portion 12, each of the intermediate part 12b and a tip end part 12c is smaller in diameter than a base end part 12a located close to the tank main body 11, and a flange 12d is formed between the base end part 12a and the intermediate part 12b. The flange 12d is formed on the outer peripheral surface of the port portion 12 over the entire periphery in the circumferential direction and projects outward in the radial direction. The outer diameters of the intermediate part 12b and the tip end part 12c are substantially equal to each other, and the valve block 3 is externally attached to the intermediate part 12b.

The valve block 3 is formed in a substantially rectangular solid shape and configured such that the valve devices 4L and 4R are attachable to both respective longitudinal direction end parts of the valve block 3. An inner hole 21 is formed at a longitudinal direction intermediate part of the valve block 3. The inner hole 21 extends in a height direction (direction that substantially coincides with the axial direction when the valve block 3 is externally attached to the port portion 12) so as to penetrate the valve block 3. The height direction is perpendicular to the longitudinal direction and a width direction. The hole diameter of the inner hole 21 is substantially equal to each of the outer diameter of the intermediate part 12b of the port portion 12 and the outer diameter of the tip end part 12c of the port portion 12, and the intermediate part 12b of the port portion 12 can be inserted into the inner hole 21. On the other hand, the hole diameter of the inner hole 21 is smaller than the diameter of the flange 12d of the port portion 12. Therefore, with the valve block 3 inserted into the port portion 12, the valve block 3 contacts and is supported by the flange 12d of the port portion 12, and the valve block 3 is arranged around the intermediate part 12b of the port portion 12. Further, an external thread is formed on an outer peripheral surface of the tip end part 12c of the port portion 12, and a nut 30 that is a fastening member is threadedly engaged with the outer peripheral surface of the tip end part 12c of the port portion 12. The nut 30 is tightened until the nut 30 contacts the valve block 3. The valve block 3 is sandwiched by the flange 12d of the port portion 12 and the nut 30 to be fastened to the port portion 12. In the valve block 3, an an inner hole portion 22 is constituted by the inner hole 21 and a substantially annular part defining the inner hole 21. A recess 23 is formed at the inner hole portion 22.

The recess 23 is formed at a height direction intermediate part of the inner hole portion 22 in the circumferential direction over the entire periphery. The recess 23 is formed by depressing the inner hole portion 22 outward in the radial direction. To be specific, a height direction intermediate part 24a of an inner peripheral surface 24 defining the inner hole 21 is located outside the other part of the inner peripheral surface 24 in the radial direction. With this, the recess 23 is formed at the inner hole portion 22. In an inserted state that is a state where the port portion 12 is inserted into the valve block 3, the recess 23 is located adjacent to the intermediate part 12b of the port portion 12. With this, a join space 25 extending in the circumferential direction of the port portion 12 over the entire periphery is formed between the inner peripheral surface 24 of the inner hole portion 22 and the outer peripheral surface of the port portion 12 so as to surround the port portion 12. To be specific, the join space 25 having an annular shape is formed around the port portion 12. The tank ports 13c and 13d of the port portion 12 face the join space 25. The join space 25 is connected to the inside of the tank main body 11 through the tank passage 13. Two block passages 26 and 27 connected to the join space 25 (i.e., connected to the recess 23) are formed at the valve block 3.

The two block passages 26 and 27 are formed in the valve block 3 at one side and the other side with respect to the inner hole 21 in the longitudinal direction, respectively. Each of the block passages 26 and 27 extends in the longitudinal direction from an outside in the longitudinal direction toward the inner hole 21 so as to penetrate the valve block 3. To be specific, the block passage 26 includes a connecting port 26a at one end thereof, and the block passage 27 includes a connecting port 27a at one end thereof. The connecting ports 26a and 27a are open on the inner peripheral surface 24 so as to face the inner hole 21. The connecting ports 26a and 27a are arranged so as to be shifted from each other in the circumferential direction by about 180 degrees on the inner peripheral surface 24. The connecting ports 26a and 27a face the recess 23 and are connected to the tank ports 13c and 13d through the join space 25. With this, the gas discharged from the tank passage 13 is introduced to the block passages 26 and 27 through the join space 25. Further, the other end of the block passage 26 is connected to a valve attachment hole 28, and the other end of the block passage 27 is connected to a valve attachment hole 29.

The valve attachment hole 28 extends outward in the longitudinal direction from the other end of the block passage 26 and is open at an outside in the longitudinal direction, and the valve attachment hole 29 extends outward in the longitudinal direction from the other end of the block passage 27 and is open at an outside in the longitudinal direction. The valve attachment holes 28 and 29 are larger in diameter than the block passages 26 and 27. The valve device 4L can be inserted from the opening of the valve attachment hole 28 into the valve attachment hole 28, and the valve device 4R can be inserted from the opening of the valve attachment hole 29 into the valve attachment hole 29. The section of the valve attachment hole 28 is substantially the same as an outer shape of the valve device 4L, and the section of the valve attachment hole 29 is substantially the same as an outer shape of the valve device 4R. In the present embodiment, each of the valve attachment holes 28 and 29 has a substantially circular section. The valve devices 4L and 4R are inserted into the respective valve attachment holes 28 and 29. The valve device 4L is threadedly engaged with an inner peripheral surface 28a defining the valve attachment hole 28, and the valve device 4R is threadedly engaged with an inner peripheral surface 29a defining the valve attachment hole 29.

Each of the valve devices 4L and 4R adjusts an opening degree of a valve passage (not shown), formed therein, to adjust the flow rate of the gas discharged from the tank 2 (or each of the valve devices 4L and 4R opens or closes the valve passage to just supply or stop supplying the gas). Examples of the valve devices 4L and 4R include an electromagnetic on-off valve, an electromagnetic valve, a manual on-off valve, a pressure regulating valve, a pressure reducing valve, a safety valve, and a check valve. Various valve devices are used as the valve devices 4L and 4R. In the following, the configurations of the valve devices 4L and 4R will be schematically described, and detailed explanations thereof are omitted. In the present embodiment, each of the valve devices 4L and 4R includes a substantially bottomed cylindrical casing and is formed as a unit by incorporating components, such as a valve element, in the casing. As described above, the valve devices 4L and 4R are inserted into the respective valve attachment holes 28 and 29 and are threadedly engaged with the respective inner peripheral surfaces 28a and 29a. Each of the valve devices 4L and 4R is pushed into the valve block 3 until a tip end thereof contacts the valve block 3. With this, a sealing member (not shown) seals between the valve device 4L and the inner peripheral surface 28a, and a sealing member (not shown) seals a gap between the valve device 4R and the inner peripheral surface 29a. The valve devices 4L and 4R are attached to the valve block 3 as above, and therefore, the gas is introduced through the block passages 26 and 27 to the valve passages of the valve devices 4L and 4R.

As described above, the valve block 3 forms the join space 25 together with the port portion 12, and the block passages 26 and 27 and the tank passage 13 are connected to each other through the join space 25. To be specific, the gas in the tank main body 11 is introduced to the join space 25 through the tank passage 13. In order that the gas introduced to the join space 25 is prevented from leaking through a gap between the valve block 3 and the port portion 12, sealing members 31 and 32 are externally attached to the intermediate part 12b of the port portion 12. Specifically, two seal grooves 33 and 34 are formed at the intermediate part 12b of the port portion 12. Each of the seal grooves 33 and 34 is formed at the outer peripheral portion in the circumferential direction over the entire periphery. The seal grooves 33 and 34 are arranged away from each other so as to be respectively located at the first side and second side with respect to the tank ports 13c and 13d in the axial direction. With the port portion 12 inserted into the valve block 3, the two seal grooves 33 and 34 are respectively located at the first side and second side with respect to the recess 23 in the axial direction. The sealing members 31 and 32 (in the present embodiment, O rings) each having an annular shape are fitted into the respective seal grooves 33 and 34. The two sealing members 31 and 32 contact the inner peripheral surface 24 of the inner hole portion 22 at the first side and second side with respect to the join space 25 (i.e., the recess 23) in the axial direction to seal between the port portion 12 and the inner hole portion 22. With this, the join space 25 is isolated from the atmosphere, and the gas in the join space 25 can be prevented from leaking to the atmosphere through between the port portion 12 and the inner hole portion 22.

In the tank apparatus 1 configured as above, the valve devices 4L and 4R are arranged outside the tank 2, and the valve block 3 is externally attached to the port portion 12. Therefore, it is unnecessary to insert the valve block 3 into the port portion 12. With this, the hole diameter of the inner hole 21 of the port portion 12, i.e., the inner hole diameter of the port portion 12 can be made smaller than that of the conventional tank apparatus, and therefore, the port portion 12 can be reduced in size. With this, the amount of carbon fibers wound around the tank main body 11 can be reduced.

As described above, according to the tank apparatus 1, the gas in the tank main body 11 is introduced to the valve devices 4L and 4R through the tank passage 13, the join space 25, and the block passages 26 and 27. To be specific, the block passages 26 and 27 are filled with the gas, and the valve block 3 receives loads in various directions from the gas in the join space 25 and the block passages 26 and 27. To be specific, the valve block 3 receives the loads from the gas by the inner peripheral surface 24 and peripheral surfaces defining the block passages 26 and 27. Each of the inner peripheral surface 24 and the peripheral surfaces is formed to have a circular section. Therefore, the loads from the gas act on the inner peripheral surface 24 and the peripheral surfaces so as to basically cancel each other. To be specific, since the valve block 3 is externally attached to the port portion 12, and the connecting ports 26a and 27a are formed on the inner peripheral surface 24, the load acting on the valve block 3 toward the first side in the axial direction (i.e., a direction in which the valve block 3 comes out from the port portion 12) from the gas can be made smaller than that of the tank apparatus of the conventional art, and therefore, the force of pushing the nut 30 toward the first side in the axial direction by the valve block 3 can be reduced. Thus, the valve block 3 and the port portion 12 can be fastened to each other by fastening power smaller than that of the tank apparatus of the conventional art. Therefore, the inner diameter of the nut 30 can be made small, and the port portion 12 with which the nut 30 is threadedly engaged can be reduced in size.

In the valve block 3, the recess 23 is formed at the inner hole portion 22. With this, the intermediate part 24a of the inner peripheral surface 24 is depressed outward in the radial direction. Therefore, two pressure receiving surfaces 35 and 36 opposed to each other are formed at the inner hole portion 22 of the valve block 3 at both respective sides of the recess 23 in the height direction (i.e., both respective sides of the recess 23 in the axial direction). With this, the load acting on the pressure receiving surface 35 and the load acting on the pressure receiving surface 36 cancel each other, and therefore, the load acting on the valve block 3 from the gas toward the first side in the axial direction can be further reduced. Therefore, even when the join space 25 is formed, the inner diameter of the nut 30 can be prevented from increasing, and the port portion 12 with which the nut 30 is threadedly engaged can be reduced in size.

The join space 25 is formed by the valve block 3 and the port portion 12 as described above, and therefore, the tank apparatus 1 has the following advantages. To be specific, even when the tank ports 13c and 13d and the corresponding connecting ports 26a and 27a are shifted from each other in the circumferential direction, these ports can be connected to each other through the join space 25. Therefore, the positional accuracy of the connecting ports 26a and 27a relative to the corresponding tank ports 13c and 13d in the circumferential direction when attaching the valve block 3 is not required, and thus, the easiness of the attachment of the valve block 3 can be improved. It should be noted that the join space 25 is not necessarily required if the positional accuracy of the connecting ports 26a and 27a relative to the tank ports 13c and 13d in the circumferential direction when attaching the valve block 3 can be secured.

In the tank apparatus 1, the valve block 3 is sandwiched by the nut 30 and the flange 12d of the port portion 12. Since the valve block 3 is rotatable relative to the port portion 12, the direction of the valve block 3 can be easily changed by loosening the nut 30. Therefore, the direction of the valve block 3 can be changed without rotating the tank 2.

### Embodiment 2

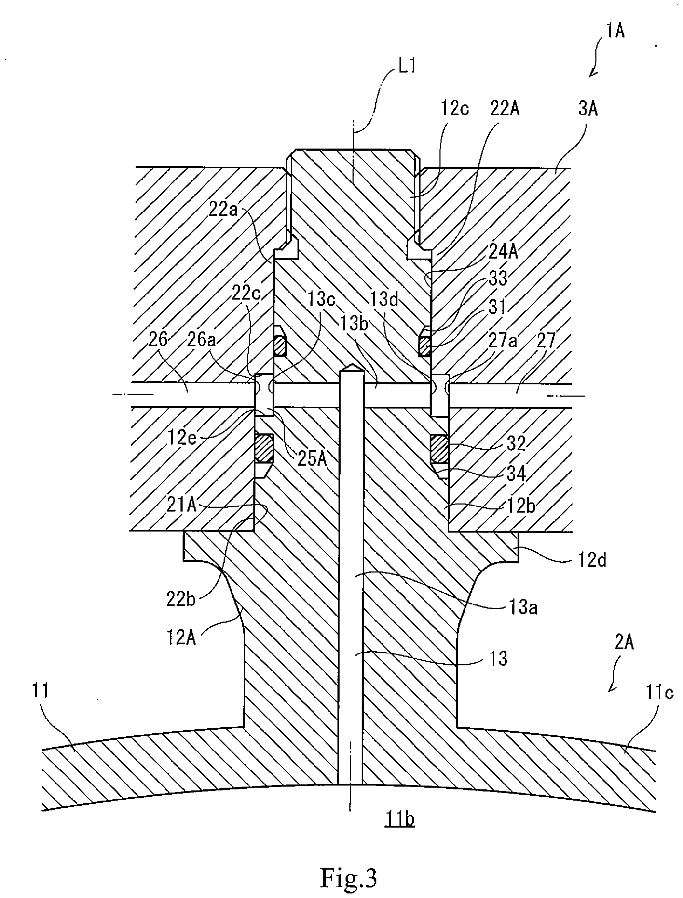

The tank apparatus 1A of Embodiment 2 shown in Fig. 3 is similar in configuration to the tank apparatus 1 of Embodiment 1. Therefore, regarding the tank apparatus 1A of Embodiment 2, components different from the components of the tank apparatus 1 of Embodiment 1 will be mainly described. The same reference signs are used for the same components, and explanations thereof are omitted. Fig. 3 is an enlarged view showing a part where a valve block 3A is inserted into and fastened to a port portion 12A, and the valve devices 4L and 4R, and the like are not shown.

The tank apparatus 1A of Embodiment 2 includes a tank 2A, a valve block 3A, and two valve devices 4L and 4R. The tank 2A includes the tank main body 11 and the port portion 12A. A tank step part 12e is formed at the intermediate part 12b of the port portion 12A. The intermediate part 12b is formed such that a tip end side with respect to the tank step part 12e is smaller in diameter than a base end side with respect to the tank step part 12e. The tank passage 13 is formed at the port portion 12A. The tank ports 13c and 13d of the tank passage 13 are arranged at the tip end side with respect to the tank step part 12e. The valve block 3A is externally attached to the intermediate part 12b and tip end part 12c of the port portion 12A having such shape.

The valve block 3A is formed in a substantially rectangular solid shape and configured such that although not shown, the valve devices 4L and 4R are attachable to both longitudinal direction end parts of the valve block 3A. An inner hole 21A is formed at a longitudinal direction intermediate part of the valve block 3A. The inner hole 21A extends in the height direction so as to penetrate the valve block 3A. Not only the intermediate part 12b of the port portion 12A but also the tip end part 12c of the port portion 12A are inserted into the inner hole 21A. An internal thread is formed on a first height direction end part of an inner peripheral surface 24A defining the inner hole 21A, and an external thread is formed on the outer peripheral surface of the tip end part 12c of the port portion 12A so as to correspond to the above internal thread. With this, the valve block 3A can be fastened to the port portion 12A by inserting the port portion 12A into the inner hole 21A and threadedly engaging the port portion 12A with the inner hole 21A. The valve block 3A is threadedly engaged with the port portion 12A to move toward the second side in the predetermined direction and be seated on and supported by the flange 12d of the port portion 12A.

A remaining part of the inner peripheral surface 24A other than the first height direction end part (i.e., the part at which the external thread is formed) is formed so as to correspond to the shape of the intermediate part 12b of the port portion 12A. To be specific, a remaining part of the inner hole portion 22A (i.e., a part corresponding to the remaining part of the inner peripheral surface 24A) includes a small-diameter part 22a located at the first side in the longitudinal direction and a large-diameter part 22b located at the second side in the longitudinal direction. The small-diameter part 22a is smaller in diameter than the large-diameter part 22b. The tip end side of the intermediate part 12b of the port portion 12A is inserted into the small-diameter part 22a, and the base end side of the intermediate part 12b of the port portion 12A is inserted into the large-diameter part 22b. A block step part 22c is formed between the small-diameter part 22a and the large-diameter part 22b. With the valve block 3A supported by the flange 12d, the block step part 22c is arranged away from the tank step part 12e toward the first side in the axial direction. With this, by attaching the valve block 3A to the port portion 12A, a join space 25A is formed between the block step part 22c and the tank step part 12e. In order to connect the tank ports 13c and 13d of the port portion 12A and the connecting ports 26a and 27a of the valve block 3 to the join space 25, the tank ports 13c and 13d are arranged in the vicinity of the tank step part 12e, and the connecting ports 26a and 27a are arranged in the vicinity of the block step part 22c. With this, the tank passage 13 is connected to the block passages 26 and 27 through the join space 25, and the gas in the tank main body 11 can be introduced to the valve devices 4L and 4R.

In the tank apparatus 1A configured as above, the block step part 22c receives the load acting toward the first side in the axial direction from the gas flowing in the join space 25A, i.e., the load acting in the direction in which the valve block 3A comes out from the port portion 12A. Further, a pressure receiving area of the block step part 22c is smaller than that of a case where the entire tip end of the housing of the valve device of the conventional tank apparatus receives the pressure of the gas, and therefore, the load acting in the direction in which the valve block 3A comes out from the port portion 12A can be made smaller than that of the conventional tank apparatus. With this, the fastening power required when the valve block 3A is fastened to the port portion 12A can be made smaller than that of the conventional tank apparatus, and therefore, the port portion 12A can be reduced in size.

According to the valve block 3A, the formation of the recess 23 is not required, unlike the valve block 3 of Embodiment 1. Therefore, the formation of the valve block 3A is easier than the formation of the valve block 3 of Embodiment 1. Further, since the nut 30 is not required, the number of parts can be reduced.

Other than the above, the tank apparatus 1A has the same operational advantages as the tank apparatus 1 of Embodiment 1.

### Embodiment 3

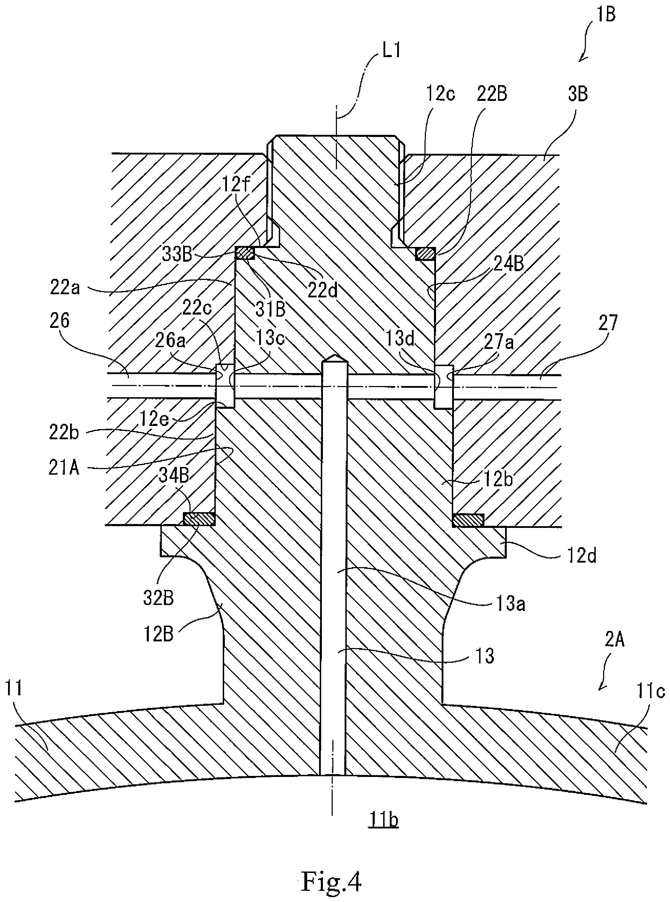

The tank apparatus 1B of Embodiment 3 shown in Fig. 4 is similar in configuration to the tank apparatus 1A of Embodiment 2. Therefore, regarding the tank apparatus 1B of Embodiment 3, components different from the components of the tank apparatus 1A of Embodiment 2 will be described, and sealing members 31B and 32B will be mainly described. The same reference signs are used for the same components, and explanations thereof are omitted. Fig. 4 is an enlarged view showing a part where the valve block 3B is inserted into and fastened to the port portion 12B, and the valve devices 4L and 4R, and the like are not shown.

In the port portion 12B of the tank 2B, as with the port portion 12A of Embodiment 2, an external thread is formed on the outer peripheral surface of the tip end part 12c, and the tip end part 12c is smaller in diameter than the intermediate part 12b. With this, a step 12f is formed between the tip end part 12c and the intermediate part 12b. The step 12f is formed in an annular shape when viewed from the first side in the axial direction. A seal groove 33B is formed at an outer peripheral edge of the step 12f. The seal groove 33B is formed by cutting out the outer peripheral edge of the step 12f in the circumferential direction over the entire periphery. The sealing member 31B (for example, an O ring) is fitted in the seal groove 33B.

As with the inner peripheral surface 24A of the valve block 3A of Embodiment 2, a first height direction end part of the inner peripheral surface 24B of the valve block 3B projects inward in the radial direction. With this, a step 22d is formed between the first height direction end part and a remaining part of the inner hole portion 22B. When the valve block 3B is attached to the port portion 12B, the sealing member 31B provided at the seal groove 33B of the port portion 12B contacts the step 22d. With this, the sealing member 31B seals a gap formed between the port portion 12B and the valve block 3B at the first side with respect to the join space 25A in the axial direction

A seal groove 34B is formed at a second height direction opening end part of the inner hole portion 22B of the valve block 3B. The seal groove 34B is formed by cutting out an inner peripheral edge of the inner hole portion 22B in the circumferential direction over the entire periphery. The sealing member 32B (for example, an O ring) is fitted into the seal groove 34B. When the valve block 3B is attached to the port portion 12B, the second height direction opening end part of the inner hole portion 22B contacts the flange 12d, and the sealing member 32B also contacts the flange 12d. With this, the sealing member 32B seals a gap formed between the port portion 12B and the valve block 3B at the second side with respect to the join space 25A in the axial direction.

According to the tank apparatus 1B of Embodiment 3, the sealing members 31B and 32B are attached more easily than the tank apparatuses 1 and 1A of Embodiments 1 and 2. Other than the above, the tank apparatus 1B of Embodiment 3 has the same operational advantages as the tank apparatus 1A of Embodiment 2.

### Other Embodiments

In each of the tank apparatuses 1, 1A, and 1B of the present embodiments, the second passage part 13b of the tank passage 13 extends linearly in the radial direction, and the block passages 26 and 27 extend linearly in the longitudinal direction. However, the shapes of the second passage part 13b and the block passages 26 and 27 are not necessarily limited to these. For example, the second passage part 13b may extend obliquely with respect to the radial direction, and the block passages 26 and 27 may extend obliquely with respect to the longitudinal direction. The shapes of these passages are not limited.

In the tank apparatus 1 of Embodiment 1, the valve block 3 is sandwiched by the nut 30 and the flange 12d of the port portion 12. However, as in the tank apparatuses 1A and 1B of Embodiments 2 and 3, the valve block 3 may be threadedly engaged with the port portion 12. Similarly, in the tank apparatuses 1A and 1B of Embodiments 2 and 3, the valve block 3A, 3B may be sandwiched by the nut 30.

Examples of the valve devices 4L and 4R attached to the valve blocks 3, 3A, and 3B of Embodiments 1, 2, and 3 include an electromagnetic valve, an electromagnetic on-off valve, a manual on-off valve, a pressure regulating valve, a pressure reducing valve, a safety valve, and a check valve. However, the valve devices 4L and 4R are not necessarily limited to these, and a valve device having any function may be attached. Further, the valve devices 4L and 4R do not necessarily have to be formed separately from the valve blocks 3, 3A, and 3B, and may be configured integrally with the valve blocks 3, 3A, and 3B. Further, the number of valve devices is not limited to two as in the present embodiments and may be one or three or more. In each of the valve blocks 3, 3A, and 3B, the two valve devices 4L and 4R are located at respective positions opposite to each other around the axis L1. However, the positions of the two valve devices 4L and 4R are not limited to these. For example, the two valve devices 4L and 4R are arranged in an L shape so as to form an angle of 90 degrees around the axis L1. The two valve devices 4L and 4R may be arranged so as to form an angle of 120 degrees.

The passages formed at each of the valve blocks 3, 3A, and 3B is not limited to the two block passages 26 and 27 and may be one passage or three or more passages. The shapes of the two block passages 26 and 27 are not limited to the linear shapes and may be bent shapes or curved shapes. The shapes of the tanks 2, 2A, and 2B are not limited to the above-described shapes. Each of the tanks 2, 2A, and 2B is only required to have such a shape that the port portion (12, 12A, 12B) projects from the tank main body 11, and the valve block (3, 3A, 3B) is externally attached to the outer peripheral portion of the port portion (12, 12A, 12B).

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention.

### Reference Signs List

- 1, 1A, 1B: tank apparatus
- 2, 2A, 2B: tank
- 3, 3A, 3B: valve block
- 4L, 4R: valve device
- 11: tank main body
- 12, 12A, 12B: port portion (projecting portion)
- 12e: tank step part
- 13: tank passage
- 13c: tank port
- 22, 22A, 22B: inner hole portion
- 22a: small-diameter part
- 22b: large-diameter part
- 22c: block step part
- 23: recess
- 24, 24A, 24B: inner peripheral surface
- 25, 25A: join space
- 26: block passage
- 26a: connecting port
- 27: block passage
- 27a: connecting port
- 30: nut
- 31, 31B: sealing member
- 32, 32B: sealing member
- 35: first pressure receiving surface
- 36: second pressure receiving surface

## Claims

1. A valve block externally attached to and fastened to a projecting portion of a tank, a valve device being attachable to the valve block so as to be located outside the tank, the tank including a tank main body and the projecting portion, the tank main body storing gas, the projecting portion projecting from the tank main body in a predetermined direction, a tank passage being formed at the projecting portion and connected to an inside of the tank main body, the tank passage including a tank port formed on an outer peripheral surface of the projecting portion,
the valve block comprising:
an inner hole portion into which the projecting portion is inserted; and
a block passage including a connecting port that is open on an inner peripheral surface of the inner hole portion, wherein
with the projecting portion inserted into the inner hole portion, the connecting port is connected to the tank passage through the tank port.

2. The valve block according to claim 1, wherein:
the inner hole portion forms a join space between the inner peripheral surface and the projecting portion, the join space extending in a circumferential direction of the projecting portion over an entire periphery of the projecting portion;
the connecting port is connected to the tank port through the join space; and
with the projecting portion inserted into the inner hole portion, a gap between the inner hole portion and the projecting portion is sealed such that the join space is isolated from an atmosphere.

3. The valve block according to claim 2, wherein the join space is formed on the inner peripheral surface of the inner hole portion in the circumferential direction over the entire periphery by depressing the inner peripheral surface of the inner hole portion outward in a perpendicular direction perpendicular to the predetermined direction.

4. The valve block according to any one of claims 1 to 3, wherein the valve block is fastened to the projecting portion by being sandwiched between a flange formed at a base end side of the projecting portion and a fastening member threadedly engaged with a tip end side of the projecting portion.

5. The valve block according to claim 2, wherein:
the inner peripheral surface of the inner hole portion includes
a small-diameter part corresponding to a tip end side of the projecting portion, the projecting portion including a tank step part at an intermediate part of the projecting portion and formed such that the tip end side with respect to the tank step part is smaller in diameter than a base end side with respect to the tank step part,
a large-diameter part corresponding to the base end side of the projecting portion, and
a block step part between the large-diameter part and the small-diameter part; and
with the projecting portion inserted into the inner hole portion, the block step part is located away from and opposed to the tank step part in the predetermined direction, and the join space is formed between the block step part and the tank step part.

6. A tank apparatus comprising:
the valve block according to any one of claims 1 to 5;
the tank including the tank main body and the projecting portion; and
two sealing members sealing between the inner hole portion and the projecting portion respectively at a first side and second side with respect to the connecting port in the predetermined direction such that the connecting port is isolated from an atmosphere with the projecting portion inserted into the inner hole portion.
